# EUROPEAN PATENT APPLICATION

(11) **EP 4 525 276 A1**
(43) Date of publication of application: **19.03.2025**
(21) Application number: 23802810.4
(22) Date of filing: 06.05.2023
(51) Int. Cl.: H02K 5/04, H02K 5/16, H02K 5/22, H02K 11/215, H02K 11/30, H02K 1/22, H02K 1/14

(54) **BRUSHLESS ELECTRIC MOTOR, AND AIR PUMP SYSTEM FOR VEHICLE SEAT**

(30) Priority: 10.05.2022 CN 202210506346
(71) Applicant: Guangdong Zhaoqing L & V Co., Ltd., Zhaoqing, Guangdong 526238 (CN)
(72) Inventor: XIE, Xiaowu, Zhaoqing, Guangdong 526238 (CN); CHEN, Liang, Zhaoqing, Guangdong 526238 (CN); CUI, Wei, Zhaoqing, Guangdong 526238 (CN)
(74) Representative: Kraus & Lederer PartGmbB
(86) International application number: PCT/CN2023/092531
(87) International publication number: WO 2023/217038

(57) **Abstract**

The present invention discloses a brushless motor, which comprises a stator assembly, a rotor assembly, a housing, an end cover and a circuit board assembly, wherein the circuit board assembly is provided with a brushless motor control chip configured as an integrated chip. The present invention also discloses an air pump system for a vehicle seat, which comprises an air pump arranged in the vehicle seat and the aforementioned brushless motor for driving the air pump. In addition to the advantages of long service life, controllable PWM speed, improved electromagnetic compatibility, low motor noise and vibration and high efficiency that a common brushless motor possesses, the brushless motor of the present invention also has the advantages of low cost, compact structure and strong resistance against electromagnetic interference.

## Description

### Technical Field

The present invention relates to the motor field, and more particularly to a brushless motor and an air pump system for a vehicle seat comprising the brushless motor.

### Background Art

To make the driver or passengers feel comfortable and relieve the driver's fatigue, a vehicle seat is usually provided with an adjustable lumbar support or lateral support system. For a lumbar support of the electric adjustable air pump type, a motor drives the air pump to inflate or deflate an airbag of the lumbar support or lateral support system, making adjustment through inflation and recovery of the airbag, thus providing a strong support for the passenger's waist. The vehicle seat can also be provided with a massage system, which massages by inflating or deflating the airbag using an air pump driven by a motor.

Owing to the price and cost advantages, brush motors are dominating the market of motors for driving air pumps of vehicle seats. The brush motor has a carbon brush structure, and a commutator commutates to keep the motor running continuously. However, due to the wear and tear of carbon brushes, brush motors usually have a short service life, and can operate for only about 2,000 hours. In addition, brush motors have such disadvantages as no speed regulation, poor electromagnetic compatibility (EMC), large vibration and noise, low output power and low efficiency.

Substituting an electronic commutator for the contact-type mechanical commutator and carbon brush of the brush motor, the brushless motor has a significantly longer service life, and has such advantages as controllable PWM (pulse width modulation) speed, improved electromagnetic compatibility (EMC), lower motor noise and vibration, and higher efficiency. However, because a controller is required in the brushless motor to control the operation of the motor, the brushless motor is much more complex than the brush motor, resulting in a significant rise in the costs.

Therefore, the air pump-type lumbar support and massage system of the vehicle seat call for a low-cost brushless motor.

### Summary of the present invention

To solve the above problems, the present invention provides a brushless motor which can be used in a seat air pump system. In addition to the advantages of long service life, controllable PWM speed, improved EMC, low noise and vibration and high efficiency that a common brushless motor possesses, the brushless motor of the present invention also has the advantages of low cost, strong resistance against electromagnetic interference (EMI), and compact structure.

One of the objects of the present invention is achieved by the following technical solution: A brushless motor, comprising a stator assembly, a rotor assembly, a housing, an end cover, and a circuit board assembly provided with a brushless motor control chip.

According to one aspect of the present invention, the brushless motor control chip is an integrated chip that integrates a switching circuit, a soft start circuit, a driving circuit and a Hall signal detection circuit. Substituting the integrated chip for the brushless motor controller greatly simplifies the control circuit, saves the cost of the control circuit, and makes the motor structure compact.

According to one aspect of the present invention, the circuit board assembly is built in the brushless motor, thereby improving the resistance of the motor against electromagnetic interference (EMI).

According to one aspect of the present invention, the housing is integrally formed by stretching, so that an end cover on one side can be saved and the coaxiality of the bearing seat can be improved.

According to one aspect of the present invention, the housing is provided with a slot, from which a power cord of the circuit board assembly is led out. An elastic plug, such as a rubber plug, is arranged between the power cord and the slot, and the elastic plug is provided with an opening allowing the power cord to pass through. The arranged elastic plug will be compressed when the end cover of the motor is assembled with the housing, forming a friction force between the elastic plug and the power cord, so that the power cord has a certain anti-pulling ability.

According to one aspect of the present invention, the surface of the elastic plug is designed with ribs. In the assembly process, the ribs contract after being pressed by the end cover, thereby absorbing the tolerance of parts between the end cover, the elastic plug and the housing, and avoiding the situation that the end cover is not assembled in place.

According to one aspect of the present invention, the brushless motor is of an inner rotor or outer rotor structure.

According to one aspect of the present invention, the rotor core of the rotor assembly comprises rotor laminations. The rotor lamination is designed with hollows, so that the weight of the rotor can be minimized while ensuring sufficient magnetic flux in the rotor core and rotor stiffness.

According to one aspect of the present invention, the angle between a tooth and tooth crown of the stator core of the stator assembly is within the range of 115-125 degrees, preferably 120 degrees, which is conducive to the orderly arrangement of windings in the slot to improve the slot fullness rate.

According to one aspect of the present invention, the brushless motor is configured to drive an air pump in a lumbar support adjustment system or a massage system of a vehicle seat. The circuit board assembly is integrated with an Electronic Control Unit (ECU) circuit of an air pump system, creating a compact structure.

According to one aspect of the present invention, the brushless motor is a single-phase motor, and the stator core of the stator assembly has an asymmetric tooth crown, which is conducive to self-start of the motor.

According to one aspect of the present invention, the asymmetrical tooth crown is divided into a large tooth crown and a small tooth crown along a tooth center line, and arc transition is designed between the large tooth crown and the small tooth crown, enabling a smooth transition of the air gap magnetic field, which is beneficial to suppressing vibration and noise.

According to one aspect of the present invention, the brushless motor is a single-phase motor with 4 poles and 4 slots or 6 poles and 6 slots.

According to one aspect of the present invention, the brushless motor is a three-phase motor with 4 poles and 6 slots or 8 poles and 6 slots.

The present invention also provides an air pump system for a vehicle seat, which comprises an air pump arranged in the vehicle seat and the aforesaid brushless motor for driving the air pump.

With the controller of the existing brushless motor replaced by an integrated chip that integrates a switching circuit, a soft start circuit, a driving circuit and a Hall signal detection circuit, the brushless motor of the present invention can reduce the use of external circuits to the greatest extent, greatly simplify the control circuit, save the costs of the control circuit, and make the motor structure compact. The reduction of costs makes it possible to apply the brushless motor to the air pump-type lumbar support or massage system of the vehicle seat. In addition, the ECU (Electronic Control Unit) circuit of the air pump system is integrated with the driving circuit of the brushless motor, which creates a more compact structure. In addition to the advantages of long service life, controllable PWM speed, improved electromagnetic compatibility, low motor noise and vibration and high efficiency that a common brushless motor possesses, the brushless motor of the present invention also has the advantages of low costs, compact structure and strong resistance against electromagnetic interference.

### Brief Description of the Drawings

Fig. 1 is a perspective view of a brushless motor according to an embodiment of the present invention.
Fig. 2 is an exploded view of the brushless motor in fig. 1.
Fig. 3 is a perspective view of an elastic plug according to an embodiment of the present invention.
Fig. 4 is a perspective view of a portion of a brushless motor housing equipped with the elastic plug shown in fig. 3.
Fig. 5 is a front view of a stator core of a single-phase motor according to an embodiment of the present invention.
Fig. 6 is a partially enlarged view of an asymmetric tooth crown of the stator core in fig. 5.
Fig. 7 is a perspective view of a brushless motor according to an embodiment of the present invention.
Fig. 8 is a perspective view of a brushless motor according to an embodiment of the present invention assembled with a seat air pump.

### Detailed Description of the Embodiments

The brushless motor according to the present invention is further described in detail below with reference to the drawings, which illustrate the embodiments of the present invention by way of examples.

In the following description, numerous specific details are set forth in order to make those skilled in the art fully understand the present invention. However, it will be apparent to those skilled in the art that the present invention may be implemented without some of these specific details. Furthermore, it will be appreciated that the present invention is not limited to the specific embodiments described herein. On the contrary, any combination of features and elements described below can be used to implement the present invention, regardless of whether they relate to different embodiments. Therefore, the following aspects, features, embodiments and advantages are for illustration only, and should not be regarded as elements or limitations of the claims, unless explicitly stated in the claims.

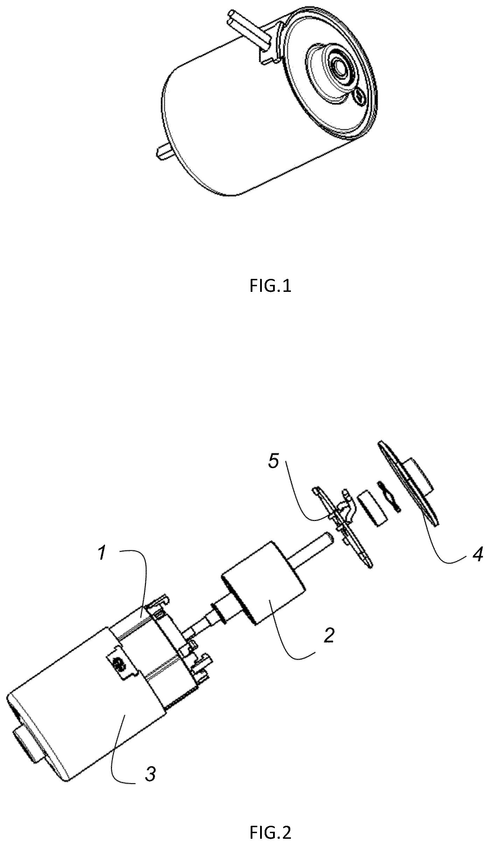

With reference to figs. 1 and 2, fig. 1 is a perspective view of a brushless motor according to an embodiment of the present invention, and fig. 2 is an exploded view of the brushless motor shown in fig. 1.

As an embodiment of the present invention, the brushless motor, as shown in fig. 2, comprises a stator assembly 1, a rotor assembly 2, a housing 3, an end cover 4, and a circuit board assembly 5 provided with a brushless motor control chip (not shown in the figure). Although the exemplary brushless motor shown in fig. 2 has an inner rotor structure, the brushless motor of the present invention may also have an outer rotor structure.

The brushless motor control chip is an integrated chip that integrates a switching circuit, a soft start circuit, a driving circuit and a Hall signal detection circuit. With the controller of the existing brushless motor replaced by an integrated chip, the brushless motor of the present invention can reduce the use of external circuits to the greatest extent, greatly simplify the control circuit, save the costs of the control circuit, and make the motor structure compact.

As a specific embodiment, the circuit board assembly 5 is built in the motor. As shown in fig. 2, the circuit board assembly 5 is arranged in the motor housing 3 at one side of the end cover 4. With the circuit board assembly 5 arranged inside the motor housing 3, the anti-electromagnetic interference (EMI) performance of the motor can be improved.

As a specific embodiment, the housing 3 of the brushless motor is integrally formed by stretching. As a result, only one side of the motor needs to be provided with an end cover 4, i.e. an end cover for the other side can be saved, and the coaxiality of the bearing seat can be improved.

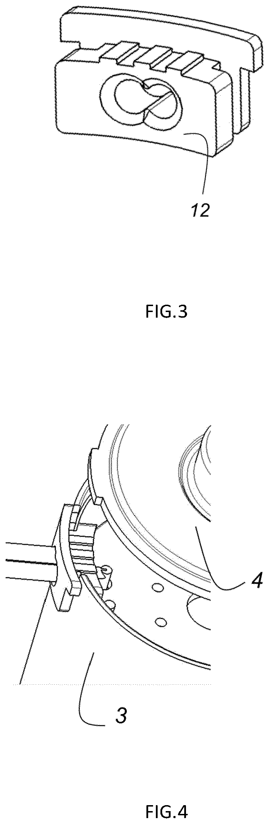

With reference to figs. 3 and 4, fig. 3 is a perspective view of the elastic plug 12 according to an embodiment of the present invention, and fig. 4 is a perspective view showing that the elastic plug 12 is assembled to the motor housing 3.

As shown in fig. 4, the motor housing 3 is provided with a slot, from which a power cord of the circuit board assembly 5 is led out. As a specific embodiment, an elastic plug 12, such as a rubber plug, is provided between the power cord and the slot of the housing 3. The arranged elastic plug will be compressed when the end cover 4 of the motor is assembled with the housing 3, forming a friction force between the elastic plug 12 and the power cord, so that the power cord has a certain anti-pulling ability.

As a specific embodiment, the elastic plug 12 is designed with ribs. As shown in fig. 3, for example, three ribs can be provided on the upper surface of the elastic plug 12. In the assembly process, the ribs contract after being pressed by the end cover 4, thereby absorbing the tolerance of parts between the end cover 4, the elastic plug 12 and the housing 3, and avoiding the situation that the end cover 4 is not assembled in place.

As a specific embodiment, the rotor core of the rotor assembly 2 comprises rotor laminations. The rotor lamination is designed with hollows, so that the weight of the rotor can be minimized while ensuring sufficient magnetic flux in the rotor core and rotor stiffness.

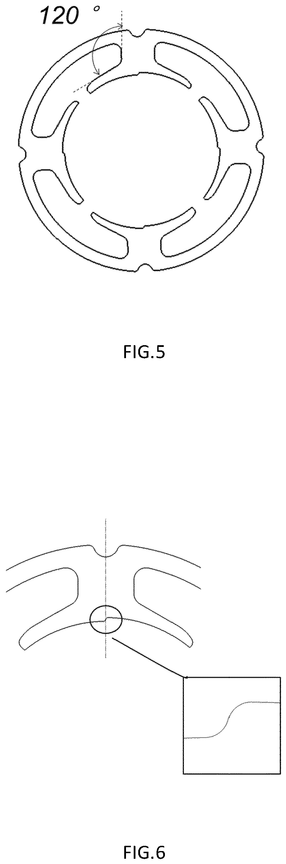

As a specific embodiment, the brushless motor is a single-phase motor, of which the rotor core has an asymmetric tooth crown structure. With reference to figs. 5 and 6, fig. 5 is a front view of a stator core of a single-phase motor according to an embodiment of the present invention, and fig. 6 is a partially enlarged view of the asymmetric tooth crown of the stator core in fig. 5.

As shown in fig. 5, as a specific embodiment, the angle between the tooth and tooth crown of the stator core is preferably designed to be 120 degrees, which is conducive to the orderly arrangement of windings in the slot to improve the slot fullness rate.

As shown in fig. 6, the stator core of the single-phase motor has an asymmetric tooth crown structure. The asymmetric tooth crown is divided into a large tooth crown and a small tooth crown along a tooth center line. Designed with an asymmetric tooth crown, the motor, after being assembled with the pump head, can still be self-started under extreme working conditions by providing sufficient starting torque.

As shown in fig. 6, as a specific embodiment, arc transition is designed between the large tooth crown and the small tooth crown. Specifically, two arc transitions are designed, enabling a smooth transition of the air gap magnetic field, which is beneficial to suppressing vibration and noise.

The present invention also relates to the application of the brushless motor in the air pump type lumbar support adjusting system and the massage system of the vehicle seat.

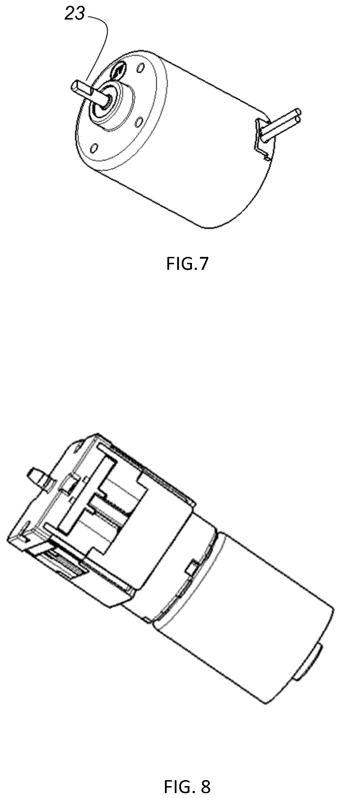

With reference to figs. 7 and 8, fig. 7 is a perspective view of a brushless motor according to an embodiment of the present invention, and fig. 8 is a perspective view of a brushless motor according to an embodiment of the present invention assembled with a seat air pump.

As shown in fig. 7, as a specific embodiment, the brushless motor is designed with a flat section on the side of the rotating shaft 23, and a portion of periphery of the flat section has a flat profile for direct connection with an air pump eccentric wheel (not shown in the figure). One side of the motor housing 3 is provided with threaded holes, so that the motor and the air pump can be connected by screws. Fig. 8 is a schematic diagram of a brushless motor according to the present invention assembled with an air pump.

As a specific embodiment, the driving circuit of the brushless motor of the present invention is integrated with the ECU (Electronic Control Unit) circuit of the air pump system. Specifically, the ECU circuit of the air pump system is integrated on the circuit board assembly of the brushless motor, thus making the air pump system have a compact structure.

As a specific embodiment, the brushless motor is a single-phase motor with 4 poles and 4 slots or 6 poles and 6 slots.

As a specific embodiment, the brushless motor is a three-phase motor, and the stator core of the stator assembly has symmetrical tooth pattern, which may contain 4 poles and 6 slots or 8 poles and 6 slots.

When the brushless motor of the present invention is used to drive the air pump in the air pump type lumbar support adjustment system or massage system of the vehicle seat, it presents more than 4 times of durability than the brush motor used in the prior art, up to about 10,000 hours. Its electromagnetic compatibility (EMC) meets the level 5 requirements of CISPR25 standard. It has a controllable PWM speed, and lower noise and vibration. The noise is less than 35dBA, and the vibration amplitude is less than 2m/s² in directions X and Y, and less than 1m/s² in direction Z. The brushless motor of the present invention also presents a higher efficiency, up to 60%-80%. It has also got a more compact structure owing to a smaller size.

The embodiments disclosed above are preferred embodiments of the present invention, but the present invention is not limited thereto. All alterations and modifications made by any technical user in the field without departing from the spirit and scope of the present invention should be included in the protection scope of the present invention. The protection scope of the present invention is determined by the claims.

## Claims

1. A brushless motor, comprising a stator assembly, a rotor assembly, a housing, an end cover, and a circuit board assembly, **characterized in that** the circuit board assembly is provided with a brushless motor control chip.

2. The brushless motor according to claim 1, **characterized in that** the control chip is integrated with a switch circuit, a soft start circuit, a drive circuit and a Hall signal detection circuit.

3. The brushless motor according to claim 2, **characterized in that** the circuit board assembly is disposed in the housing.

4. The brushless motor according to claim 3, **characterized in that** the housing is integrally formed by stretching.

5. The brushless motor according to claim 4, **characterized in that** the housing is provided with a slot, on which an elastic plug is arranged, and a power cord of the circuit board assembly is led out from the elastic plug.

6. The brushless motor according to claim 5, **characterized in that** the elastic plug has ribs.

7. The brushless motor according to claim 6, **characterized in that** the rotor assembly comprises rotor laminations provided with hollows.

8. The brushless motor according to claim 7, **characterized in that** the stator assembly comprises a stator core, and a tooth and a tooth crown of which form an angle of 115-125 degrees.

9. The brushless motor according to claim 8, **characterized in that** the brushless motor is of an inter rotor or outer rotor structure.

10. The brushless motor according to any one of claims 1-8, **characterized in that** the brushless motor is configured to drive an air pump in a seat lumbar support adjustment system or a massage system.

11. The brushless motor according to claim 10, **characterized in that** the circuit board assembly is integrated with an ECU circuit of an air pump system.

12. The brushless motor according to claim 11, **characterized in that** the motor is a single-phase motor, and the stator core of the stator assembly has an asymmetric tooth crown.

13. The brushless motor according to claim 12, **characterized in that** the asymmetrical tooth crown is divided into a large tooth crown and a small tooth crown along a tooth center line, and arc transition is designed between the large tooth crown and the small tooth crown.

14. The brushless motor according to any one of claims 11-13, **characterized in that** the motor is provided with 4 poles and 4 slots or 6 poles and 6 slots.

15. The brushless motor according to claim 11, **characterized in that** the motor is a three-phase motor with 4 poles and 6 slots or 8 poles and 6 slots.

16. An air pump system for a vehicle seat, **characterized in that** the air pump system comprises an air pump arranged in the vehicle seat and a brushless motor for driving the air pump according to any one of claims 1-15.
